# EUROPEAN PATENT SPECIFICATION

(11) **EP 1 726 617 B1**
(45) Date of publication and mention of the grant of the patent: **14.05.2008**
(21) Application number: 06114349.1
(22) Date of filing: 22.05.2006
(51) Int. Cl.: C08L 9/06, C08L 7/00, C08K 3/04, B60C 1/00

(54) **Tire with tread comprised of natural rubber and specialized emulsion prepared styrene/butadiene elastomer**
Reifen mit einer Lauffläche aus Naturkautschuk und einem speziellen emulsionspolymerisierten Styrol/Butadien-Kautschuk
Pneumatique avec un bande de roulement comprenant un caoutchouc naturel et un élastomère styrène/butadiène polymérisé en émulsion

(30) Priority: 27.05.2005 US 140035
(43) Date of publication of application: 29.11.2006
(73) Proprietor: THE GOODYEAR TIRE & RUBBER COMPANY, Akron, OH 44316-0001 (US)
(72) Inventor: Sandstrom, Paul Harry, Cuyahoga Falls, OH 44223 (US); Steiner, Pascal Patrick, L-9233, Diekirch (LU)
(74) Representative: Kutsch, Bernd

(56) References cited:
- EP-A- 0 405 904
- EP-A- 0 942 042
- EP-A- 1 452 344
- US-A1- 2002 061 955

## Description

### Field of the Invention

This invention relates to a tire with a tread of a natural rubber-rich rubber composition. A partial replacement of the natural rubber in the tire tread is accomplished by an inclusion of a specialized emulsion polymerization prepared styrene/butadiene rubber (specialized E-SBR) having a glass transition temperature (Tg) similar to the Tg of natural cis 1,4-polyisoprene rubber. A significant aspect of the invention is a partial replacement of natural cis 1,4-polyisoprene rubber in the tread rubber composition.

### Background of the Invention

A challenge is presented of replacing a portion of natural cis 1,4-polyisoprene rubber with a synthetic rubber in a natural rubber-rich tire tread rubber composition to achieve a rubber composition of similar physical properties. A motivation for such challenge is a desire for a natural rubber alternative, at least a partial alternative, in a form of a synthetic rubber to offset relative availability and/or cost considerations of natural rubber.

Therefore, such challenge has been undertaken to evaluate the feasibility of replacing a portion of natural rubber in a tire tread (for rubber treads which contain a significant amount of natural rubber such as treads for heavy duty tires) with a synthetic rubber other than a synthetic cis 1,4-polyisoprene.

A simple substitution of a synthetic rubber into a tire tread rubber composition which contains a significant natural rubber content is not considered herein to be a simple alternative where it is desired to achieve a rubber composition with similar physical properties.

In practice, pneumatic rubber tires conventionally have rubber treads which contain a running surface of the tire intended to be ground contacting.

Such tire treads are subject, under operating conditions, to considerable dynamic distortion and flexing, abrasion due to scuffing, fatigue cracking and weathering such as, for example, atmospheric aging.

Tires, particularly large tires such as for example, large off-the-road, truck, agricultural tractor, as well as aircraft tires, which are intended to be subject to heavy loads and inherent tendency of internal heat build up and associated high temperature operation, generally contain a significant natural cis 1,4-polyisoprene rubber content, because of, for example, the well known durability of the natural rubber as compared to synthetic diene based elastomers in general. Such tires may have a tread which is of a natural rubber-rich rubber composition, namely which contains more than 50 phr of natural rubber (e.g. at least 50 weight percent of the elastomers in the tread rubber composition is natural rubber).

Significant physical properties for the natural rubber-rich tire tread rubber compositions are considered herein to be rebound (at 100°C) which contributes to rolling resistance of the tire and therefore fuel economy of the associated vehicle, with higher values being desired for the Rebound property.

An additional desirable physical property is considered herein to be higher low strain stiffness property as indicated by Shore A hardness values to promote cornering coefficient and handling for the tire and resistance to tread wear.

Further desirable properties for the tread rubber composition include relatively high tear strength values at 23°C or 95°C to promote resistance to chip chunking for the tire tread as well as relatively low DIN abrasion values to promote resistance to abrasive wear (e.g. promote resistance to tread wear) as the associated vehicle is being driven.

Accordingly, it is readily seen that a partial substitution of a synthetic rubber for a portion of the natural rubber in a natural rubber-rich tread rubber composition is not a simple matter, and requires more than routine experimentation, where it is desired to substantially retain, or improve upon, a suitable balance of the representative physical properties of the natural rubber-rich tread rubber composition itself.

Generally, such tire tread rubber compositions may also contain various amounts of additional synthetic diene-based elastomers so long as the primary rubber in the tread rubber composition is the natural rubber. Such additional synthetic diene based elastomers may include, for example, cis 1,4-polybutadiene rubber to enhance, for example, abrasion resistance and associated resistance to tread wear as well as higher Tg (e.g. higher than - 60°C) solution or emulsion polymerization prepared styrene/butadiene copolymer elastomers to enhance, for example tread traction.

However, for this invention, a tire tread with running surface is presented of a rubber composition which comprises a natural rubber-rich rubber composition in which a major rubber portion of its rubber content is natural cis 1,4-polyisoprene rubber typically having an onset Tg in a range of about -65°C and minor rubber portion as a specialized styrene/butadiene rubber (specialized E-SBR).

The specialized E-SBR for use in this invention has a Tg in a range of from -70°C to -60°C and a defined combination of bound styrene content and Mooney (ML1+4), 100°C viscosity. The specialized E-SBR for the practice of this invention has a bound styrene content in a range of from 12 to 16 percent with a Mooney (ML1+4), 100°C, viscosity in a range of from 60 to 100. In particular the preferable specialized E-SBR having a bound styrene in a range of 13 to 15 percent combined with a Mooney (ML1+4), 100°C, viscosity in a range from 70 to 90.

In the practice of this invention, the specialized E-SBR rubber has been observed to enable a partial replacement of the natural cis 1,4-polyisoprene rubber intended for use in natural rubber-rich tread compositions of relatively large tires which are designed to experience relatively large loads under working conditions with an associated internal heat generation.

A reference to glass transition temperature, or Tg, of an rubber (elastomer) for use in this invention represents the onset glass transition temperature of the respective rubber in its uncured state. The Tg can be suitably determined by a differential scanning calorimeter (DSC) at a temperature rate of increase of 10°C per minute (ASTM 3418), a procedure well known to those having skill in such art.

In the description of this invention, the terms "compounded" rubber compositions and "compounds"; where used refer to the respective rubber compositions which have been compounded with appropriate compounding ingredients such as, for example, carbon black, oil, stearic acid, zinc oxide, silica, wax, antidegradants, resin(s), sulfur and accelerator(s) and silica and silica coupler where appropriate. The terms "rubber" and "elastomer" may be used interchangeably. The amounts of materials are usually expressed in parts of material per 100 parts of rubber polymer by weight (phr).

### Disclosure and Practice of the Invention

In accordance with this invention, a tire having a tread (with a tire running surface intended to be ground contacting) is provided wherein said tread is of a natural rubber-rich rubber composition comprising, based upon parts by weight per 100 parts by weight rubber (phr):
(A) from 98 to 60, alternately 95 to 70, phr of natural cis 1,4-polyisoprene rubber (NR) having a Tg of about -65°C or in a range of from - 67°C to -62°C, and
(B) from 2 to 40 phr, alternately from 5 to 30 phr, of a specialized emulsion polymerization prepared styrene/butadiene rubber (specialized E-SBR) having a Tg in a range of from -70°C to -60°C (similar to the Tg of the NR) selected from :
   (1) an E-SBR having a bound styrene content in a range of from 12 to 16 percent combined with a Mooney (ML1+4), 100°C, viscosity in a range of from 60 to 100, or, more preferably,
   (2) an E-SBR having a bound styrene content in a range of from 13 to 15 percent combined with a Mooney (ML1+4), 100°C, viscosity in a range of from 70 to 90;
(C) optionally from zero to 20, alternately 5 to 15, phr of synthetic cis 1,4-polyisoprene rubber;
(D) from 30 to 120, phr of particulate reinforcing fillers comprising:
   (1) 5 to 120, alternately from 10 to 70 and further alternately from 20 to 50, phr of rubber reinforcing carbon black, and
   (2) from zero to 60, alternately from 5 to 60 and further alternately from 5 to 25 phr of amorphous synthetic silica, preferably precipitated silica.

Additionally, the reinforcing filler may also contain a silica-containing carbon black which contains domains of silica on its surface wherein the silica domains contain hydroxyl groups on their surfaces.

The silica (e.g. precipitated silica) may optionally, and if desired, be used in conjunction with a silica coupler to couple the silica to the elastomer(s), to thus enhance its effect as reinforcement for the elastomer composition. Use of silica couplers for such purpose are well known and typically have a moiety reactive with hydroxyl groups (e.g. silanol groups) on the silica and another moiety interactive with the elastomer(s) to create the silica-to-rubber coupling effect.

The specialized E-SBR may be prepared, for example, using conventional aqueous emulsion polymerization of styrene and 1,3-butadiene monomers in an aqueous medium in the presence of a redox catalyst system (e.g. iron and hydroperoxide based) with a controlled styrene/butadiene monomer charge to achieve the desired bound styrene content of 12 to 16, or more preferably from 13 to 15 percent, which would not require undue experimentation by one having skill in such art.

As hereinbefore mentioned, a coupling agent may, if desired, be utilized with the silica to aid in its reinforcement of the rubber composition which contains the silica. Such coupling agent conventionally contains a moiety reactive with hydroxyl groups on the silica (e.g. precipitated silica) and another and different moiety interactive with the diene hydrocarbon based elastomer.

In practice, said coupling agent may be, for example,
(A) a bis-(3-trialkoxysilylalkyl) polysulfide such as, for example, a bis-(3-triethoxysilylpropyl) polysulfide, having an average of from 2 to 4 and more preferably an average of from 2 to 2.6 or from 3.4 to 4, connecting sulfur atoms in its polysulfidic bridge, or
(B) a combination of a bis-(3-triethoxysilylpropyl) polysulfide having an average of from 2 to 2.6 connecting sulfur atoms in its polysulfidic bridge and a bis-(3-triethoxysilylpropyl) polysulfide having an average of from 3.4 to 4 connecting sulfur atoms in its polysulfidic bridge, wherein said polysulfide having an average of from 2 to 2.6 connecting sulfur atoms in its polysulfidic bridge (to the exclusion of such polysulfide having an average of from 3 to 4 connecting sulfur atoms in its polysulfidic bridge) is blended with said rubber composition in the absence of sulfur and sulfur vulcanization accelerator and wherein said polysulfide having an average of from 3.4 to 4 connecting sulfur atoms in its polysulfidic bridge is thereafter blended with said rubber composition in the presence of sulfur and at least one sulfur vulcanization accelerator, or
(C) an organoalkoxymercaptosilane composition of the general Formula (I) represented as:

   (I) (X)ₙ(R⁷O)₃₋ₙ―S―R₈―SH

   wherein X is a radical selected from a halogen, namely chlorine or bromine and preferably a chlorine radical, and from alkyl radicals having from one to 16, preferably from one through 4, carbon atoms, preferably selected from methyl, ethyl, propyl (e.g. n-propyl) and butyl (e.g. n-butyl) radicals;
   wherein R⁷ is an alkyl radical having from 1 through 18, alternately 1 through 4, carbon atoms preferably selected from methyl and ethyl radicals and more preferably an ethyl radical; wherein R₈ is an alkylene radical having from one to 16, preferably from one through 4, carbon atoms, preferably a propylene radical; and n is an average value of from zero through 3, preferably zero, and wherein, in such cases where n is zero or 1, R⁷ may be the same or different for each (R⁷O) moiety in the composition, and
(D) an organoalkoxymercaptosilane in a form of the said organoalkoxymercaptosilane (of the general Formula I) having its mercapo moiety capped with a moiety which uncaps its mercapto group upon heating to an elevated temperature in the presence of an amine.

Representative examples of various organoalkoxymercaptosilanes are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

Such organoalkoxymercaptosilanes may be capped with various moieties as discussed above.

A representative example of a capped organoalkoxymercaptosilane coupling agent useful for this invention is a liquid 3-octanoylthio-1-propyltriethoxysilane as an NXTä Silane from the GE Silicones Company.

The coupling agent may, for example, be added directly to the elastomer mixture or may be added as a composite of precipitated silica and such coupling agent formed by treating a precipitated silica therewith or by treating a colloidal silica therewith and precipitating the resulting composite.

For example, said silica (e.g. precipitated silica), or at least a portion of said silica, may be pre-treated prior to addition to said elastomer(s):
(A) with an alkylsilane of the general Formula (II), or
(B) with said bis(3-triethoxysilylpropyl) polysulfide having an average of from 2 to 4 connecting sulfur atoms in its polysulfidic bridge, or
(C) with said organomercaptosilane of the general Formula (I), or
(D) with a combination of said alkylsilane of general Formula (II) and said bis(3-triethoxysilylpropyl) polysulfide having an average of from 2 to 4 connecting sulfur atoms in its polysulfidic bridge, or
(E) with a combination of said alkylsilane of general Formula (II) and said organomercaptosilane of general Formula (I);
wherein said alkylsilane of the general Formula (II) is represented as:

(II) Xₙ―Si―R₆₍₄₋ₙ₎

wherein R₆ is an alkyl radical having from 1 to 18 carbon atoms, preferably from 1 through 4 carbon atoms; n is a value of from 1 through 3; X is a radical selected from the group consisting of halogens, preferably chlorine, and alkoxy groups selected from methoxy and ethoxy groups, preferably an ethoxy group.

A significant consideration for said pre-treatment of said silica is to reduce, or eliminate, evolution of alcohol in situ within the rubber composition during the mixing of the silica with said elastomer such as may be caused, for example, by reaction of such coupling agent contained within the elastomer composition with hydroxyl groups (e.g. silanol groups) contained on the surface of the silica.

It is readily understood by those having skill in the art that the rubber compositions would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur-vulcanized material (rubbers), the additives mentioned above are selected and commonly used in conventional amounts.

Typical additions of reinforcing carbon black have been hereinbefore discussed. Typical amounts of tackifier resins, if used, may comprise 0.5 to 10 phr. Typical amounts of processing aids may comprise 1 to 20 phr. Such processing aids can include, for example, aromatic, napthenic, and/or paraffinic processing oils. Typical amounts of antioxidants comprise 1 to 5 phr. A representative antioxidant may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 2 to 6 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur-vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur-vulcanizing agent is elemental sulfur. Sulfur-vulcanizing agents are used in an amount ranging from 0.5 to 4 phr, with a range of from 0.5 to 2.25 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. Preferably, the primary accelerator is a sulfenamide. If a second accelerator is used, the secondary accelerator is preferably a guanidine, dithiocarbamate or thiuram compound.

The tire can be built, shaped, molded and cured by various methods known to those having skill in such art.

The invention may be better understood by reference to the following example in which the parts and percentages are by weight unless otherwise indicated.

### EXAMPLE I

Experiments were undertaken to evaluate the feasibility of replacing a portion of natural rubber in a natural rubber-rich rubber composition. Initially, for comparative purposes, as shown in this Example I, natural rubber rich rubber compositions were prepared to evaluate the effect of replacing a portion of the natural rubber with either conventional emulsion SBR rubber having a 23.5 percent bound styrene content, referred to herein as E-SBR(23.5), or cis 1,4-polybutadiene rubber.

Rubber composition Samples A through G were prepared, with Sample A being a Control sample of a natural rubber-rich rubber composition, with Samples B through G being evaluation Samples.

The rubber composition samples were prepared by mixing the elastomers(s) together with reinforcing fillers and other rubber compounding ingredients in a first non-productive mixing stage (NP) an internal rubber mixer for 4 minutes to a temperature of 160°C. The mixture is then further sequentially mixed in a second non-productive mixing stage (NP) in an internal rubber mixer for 2 minutes to a temperature of 160°C. The resulting mixture is then mixed in a productive mixing stage (P) in an internal rubber mixer with curatives for 2 minutes to a temperature of 110°C. The rubber composition is cooled to below 40°C between each of the non-productive mixing steps and between the second non-productive mixing step and the productive mixing step.

Table 1 illustrates the basic formulation for Control Sample A and Evaluation Samples B through G and Table 2 reports various physical properties resulting from variations of the basic formulation as reported in the heading of Table 2.

**Table 1 (Basic Formulation)**

| **First Non-Productive Mixing Step** | **Parts** |
|---|---|
| Natural cis 1,4-polyisoprene rubber | variable |
| Emulsion styrene/butadiene elastomer, E-SBR(23.5)¹ | variable |
| Cis-1,4-polybutadiene | variable |
| Specialized emulsion styrene/butadiene elastomer, E-SBR(16)² | variable |
| Carbon Black³ | 50 |
| Processing oil⁴ | 5 |
| Fatty acid⁵ | 2 |
| Antioxidant⁶ | 2 |
| Zinc oxide | 5 |

| **Second Non-Productive Mixing Step** | |
|---|---|
| Mixed to 160°C, no ingredients added | |

| **Productive Mixing Step** | |
|---|---|
| Sulfur | 1.4 |
| Accelerator(s)⁷ | 1 |

| | |
|---|---|
| ¹Emulsion polymerization prepared styrene/butadiene elastomer containing 23.5 percent bound styrene, E-SBR(23.5), having an onset Tg of - 53°C and obtained as PLF1502 from The Goodyear Tire & Rubber Company. The E-SBR (23.5) with a bound styrene content of 23.5 percent and onset Tg of -53°C is considered herein to be a relatively conventional E-SBR. ²Specialized emulsion polymerization prepared styrene/butadiene elastomer, E-SBR(16), containing 16 percent bound styrene (significantly reduced from the bound styrene content of conventional E-SBR of 23.5 percent) and having an onset Tg of -61°C (similar to the Tg of the NR), and a Mooney (ML1+4), 100°C, viscosity of 60, from The Goodyear Tire & Rubber Company ³N229, a rubber reinforcing carbon black ASTM designation ⁴Flexon 641 from the Exxon Mobil Company ⁵Blend comprised of stearic, palmitic and oleic acids. ⁶Quinoline type ⁷Tertiary butyl sulfenamide | |

The following Table 2 illustrates cure behavior and various physical properties of natural rubber-rich rubber compositions based upon the basic recipe of Table 1 and reported herein as a Control Sample A and Evaluation Samples B through G. Where cured rubber samples are examined, such as for the stress-strain, rebound, hardness, tear strength and abrasion measurements, the rubber samples were cured for 32 minutes at a temperature of 150°C.

**Table 2 - Comparative Rubber Compositions**

| | **Control** | | | | | | |
|---|---|---|---|---|---|---|---|
| **Rubber Compound (Cpd) Samples** | **A** | **B** | **C** | **D** | **E** | **F** | **G** |
| Natural cis 1,4-polyisoprene rubber | 100 | 95 | 95 | 90 | 90 | 80 | 80 |
| Emulsion styrene/butadiene rubber, E-SBR(23.5) | 0 | 5 | 0 | 10 | 0 | 20 | 0 |
| Cis 1,4-polybutadiene rubber | 0 | 0 | 5 | 0 | 10 | 0 | 20 |

| **Rheometer, 150°C (MDR)¹** | | | | | | | |
|---|---|---|---|---|---|---|---|
| Maximum torque (dNm) | 17.89 | 17.23 | 17.66 | 16.98 | 18.28 | 17.3 | 18.76 |
| Minimum torque (dNm) | 2.84 | 2.63 | 2.87 | 2.59 | 2.97 | 2.7 | 2.97 |
| Delta torque (dNm) | 15.05 | 14.6 | 14.79 | 14.39 | 15.31 | 14.6 | 15.79 |
| T90-, minutes | 12.1 | 12.8 | 12.2 | 14.4 | 12.7 | 16.4 | 13.6 |

| **Stress-strain (ATS)²** | | | | | | | |
|---|---|---|---|---|---|---|---|
| Tensile strength (MPa) | 22.6 | 22.4 | 22.7 | 22.1 | 22.4 | 22.6 | 22 |
| Elongation at break (%) | 445 | 458 | 455 | 455 | 455 | 464 | 467 |
| 300% modulus, ring (MPa) | 13.85 | 12.94 | 13.4 | 12.76 | 13.15 | 12.93 | 12.29 |

| **Rebound** | | | | | | | |
|---|---|---|---|---|---|---|---|
| 23°C | 50 | 48 | 50 | 47 | 50 | 47 | 53 |
| 100°C | 63 | 61 | 62 | 62 | 61 | 61 | 63 |

| **Hardness (Shore A)** | | | | | | | |
|---|---|---|---|---|---|---|---|
| 23°C | 66 | 66 | 64 | 65 | 66 | 67 | 66 |
| 100°C | 57 | 57 | 57 | 57 | 58 | 58 | 58 |

| **Tear strength², N** | | | | | | | |
|---|---|---|---|---|---|---|---|
| 23°C | 268 | 322 | 245 | 317 | 239 | 304 | 233 |
| 100°C | 163 | 170 | 162 | 154 | 139 | 143 | 111 |

| **DIN Abrasion⁴** | | | | | | | |
|---|---|---|---|---|---|---|---|
| Rel Vol. Loss, cc | 126 | 129 | 114 | 123 | 108 | 118 | 93 |

| | | | | | | | |
|---|---|---|---|---|---|---|---|
| ¹Data obtained according to Moving Die Rheometer instrument, model MDR-2000 by Alpha Technologies, used for determining cure characteristics of elastomeric materials, such as for example Torque, T90 etc. ²Data obtained according to Automated Testing System instrument by the Instron Corporation which incorporates six tests in one system. Such instrument may determine ultimate tensile, ultimate elongation, modulii, etc. Data reported in the Table is generated by running the ring tensile test station which is an Instron 4201 load frame. ³Data obtained according to a peel strength adhesion test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument. The area of contact at the interface between the rubber samples is facilitated by placement of a Mylarä film between the samples with a cut-out window in the film to enable the two rubber samples to contact each other following which the samples are vulcanized together and the resultant composite of the two rubber compositions used for the peel strength test. ⁴Data obtained according to DIN 53516 abrasion resistance test procedure using a Zwick drum abrasion unit, Model 6102 with 2.5 Newtons force. DIN standards are German test standards. The DIN abrasion results are reported as relative values to a control rubber composition used by the laboratory. | | | | | | | |

As hereinbefore pointed out, significant physical properties for the natural rubber-rich rubber composition for a tire tread application are considered herein to be Rebound, hardness, tear strength and DIN abrasion resistance and the data in Table 2 is reviewed with this consideration.

For example, higher values of low strain stiffness properties as indicated by the Shore A hardness values are considered herein to promote improvements in tire handling and resistance to tire tread wear for a tire having a tread of such composition.

Higher tear strength values are normally desired to promote chip chunk resistance of a tire tread.

Lower DIN abrasion values are normally desired as representing a greater resistance to abrasion and being predictive of greater resistance to tread wear as the associated vehicle is being driven for a tire having a tread of such composition.

From Table 2 it can be seen that replacement of a portion of the natural rubber in the natural rubber-rich rubber composition with increasing amounts of conventional E-SBR(23.5) as PLF1502, namely from 5 to 20 phr, resulted in a reduction of Rebound (increase in hysteresis) at 23°C and at 100°C, an increase of tear strength at 23°C and slight reduction in tear strength at 95°C, a slight improvement in abrasion as shown by a lower DIN abrasion value and minimal effect on low strain stiffness as shown by Shore A hardness values as compared to the natural rubber-rich rubber composition as Control Sample A. The most detrimental impact is seen herein as being the reduction in Rebound values which would be expected to result in an increase in hysteresis of the rubber composition and resulting worse (increase in) rolling resistance for a tire having a tread of such rubber composition, thus a negative effect on fuel economy of an associated vehicle.

In contrast, the gradual replacement of natural rubber in the natural rubber-rich rubber composition with cis 1,4-polybutadiene rubber (ranging from 5 to 20 phr) resulted in equal to higher rebound values, lower tear strength values, similar hardness and improved abrasion resistance. The loss in tear strength would not be considered acceptable herein for use as a rubber composition in a tire tread.

With these mixed results, a portion of which were favorable physical results from replacing a portion of the natural rubber in the natural rubber-rich rubber composition with the conventional E-SBR (23.5) or the cis 1,4-polybutadiene rubber, it was decided to evaluate a substitution of a portion of the natural rubber with a combination of the conventional E-SBR (23.5) and cis 1,4-polybutadiene elastomers.

### EXAMPLE II

Additional experiments were undertaken to evaluate the feasibility of replacing a portion of natural rubber in a natural rubber-rich rubber composition with a combination of a conventional E-SBR(23.5) and cis 1,4-polybutadiene rubber.

Rubber composition Samples H through M were prepared, with Sample H being a natural rubber-rich rubber composition Control Sample and Samples I through M being Evaluation Samples.

The rubber composition samples were prepared in the manner of Example I.

Table 3 reports various physical properties resulting from variations of the basic formulation (Table 1 of Example I) as reported in the heading of Table 3.

**Table 3 - Comparative Rubber Compositions**

| | **Control** | | | | | |
|---|---|---|---|---|---|---|
| **Rubber Compound (Cpd)Samples** | **H** | **I** | **J** | **K** | **L** | **M** |
| Natural cis 1,4-polyisoprene rubber | 100 | 90 | 80 | 70 | 60 | 50 |
| Emulsion styrene/butadiene rubber, E-SPR(23.5) | 0 | 6 | 12 | 18 | 24 | 30 |
| Cis 1,4-polybutadiene rubber | 0 | 4 | 8 | 12 | 16 | 20 |

| **Rheometer, 150°C (MDR)¹** | | | | | | |
|---|---|---|---|---|---|---|
| Maximum torque (dNm) | 18.67 | 18.95 | 19.18 | 19.51 | 20.12 | 19.68 |
| Minimum torque (dNm) | 3.11 | 3.3 | 3.31 | 3.37 | 3.37 | 3.24 |
| Delta torque (dNm) | 15.56 | 15.65 | 15.87 | 16.14 | 16.75 | 16.44 |
| T90, minutes | 11 | 12.6 | 14.4 | 16.1 | 18 | 20.5 |

| **Stress-strain (ATS)¹** | | | | | | |
|---|---|---|---|---|---|---|
| Tensile strength (MPa) | 21.5 | 21.7 | 22.6 | 22.6 | 21.9 | 22.2 |
| Elongation at break (%) | 445 | 450 | 466 | 471 | 462 | 475 |
| 300% modulus, ring (MPa) | 13.07 | 12.8 | 12.8 | 12.6 | 12.7 | 12.3 |

| **Rebound** | | | | | | |
|---|---|---|---|---|---|---|
| 23°C | 50 | 49 | 48 | 49 | 48 | 49 |
| 100°C | 63 | 62 | 61 | 61 | 61 | 61 |

| **Hardness (Shore A)** | | | | | | |
|---|---|---|---|---|---|---|
| 23°C | 64 | 66 | 66 | 67 | 67 | 67 |
| 100°C | 57 | 57 | 58 | 59 | 59 | 59 |

| **Tear strength, N** | | | | | | |
|---|---|---|---|---|---|---|
| 23°C³ | 407 | 430 | 396 | 320 | 282 | 298 |
| 95°C³ | 167 | 132 | 140 | 117 | 104 | 98 |

| **DIN Abrasion** | | | | | | |
|---|---|---|---|---|---|---|
| 2.5N,cc loss⁴ | 122 | 117 | 105 | 95 | 90 | 88 |

From Table 3 it can be seen that use of combinations of a conventional E-SBR(23.5) and cis 1,4-polybutadiene rubbers as replacement for a portion of natural rubber (ranging from 10 to 50 phr based on a total of 100 phr) resulted in moderately favorable physical properties including a slight reduction of rebound properties, similar hardness values, reduced tear strength and improved abrasion resistance.

However, it is desired herein to provide a more simplistic substitution of the natural rubber in the natural rubber-rich rubber composition, namely substitution of a single elastomer instead of a combination of elastomers.

It is also desired to provide for a partial substitution of the natural rubber with an elastomer without the reduction in hysteresis (increase in rebound property), while
substantially maintaining the strength properties, of the rubber composition occasioned by use of the more conventional E-SBR(23.5) as a substitutive elastomer.

### EXAMPLE III

Further experiments were undertaken to evaluate the feasibility of replacing a portion of natural rubber in a rubber composition with a specialized emulsion polymerization prepared styrene/butadiene rubber having a significantly reduced bound styrene content of 16 percent, referred to herein as E-SBR(16) and blends composed of a conventional emulsion SBR rubber, E-SBR(23.5) and cis 1,4-polybutadiene rubber.

Rubber composition Samples N through R were prepared, with Sample N being a natural rubber-rich rubber composition as a Control Sample and Samples O through R being Evaluation Samples, in which Evaluation Samples O and Q contained the E-SBR(16) and Evaluation Samples P and R contained the combination of the E-SBR(23.5) and cis 1,4-polybutadiene rubber.

The rubber composition samples were prepared in the manner of Example I.

The specialized E-SBR(16) had a bound styrene content of 16 weight percent, a Mooney (ML1+4), 100°C viscosity of 60 and a Tg (onset) glass transition temperature of - 61 °C which was a Tg similar to the Tg of the natural rubber).

Table 4 reports various physical properties resulting from variations of the basic formulation (Table 1 of Example I) as reported in the heading of Table 4.

**Table 4**

| | **Control** | | | | |
|---|---|---|---|---|---|
| **Rubber Compound (Cpd) Samples** | **N** | **O** | **P** | **Q** | **R** |
| Natural cis 1,4-polyisoprene rubber | 100 | 80 | 80 | 60 | 60 |
| Specialized emulsion styrene/ butadiene rubber, E-SBR(16) | 0 | 20 | 0 | 40 | 0 |
| Emulsion styrene/butadiene rubber, E-SPR(23.5) | 0 | 0 | 12 | 0 | 24 |
| Cis 1,4-polybutadiene rubber | 0 | 0 | 8 | 0 | 16 |

| **Rheometer, 150°C (MDR)¹** | | | | | |
|---|---|---|---|---|---|
| Maximum torque (dNm) | 17.95 | 17.44 | 17.16 | 17.02 | 17.78 |
| Minimum torque (dNm) | 2.89 | 3.03 | 2.83 | 2.89 | 2.77 |
| Delta torque (dNm) | 15.06 | 14.41 | 14.33 | 14.13 | 15.01 |
| T90, minutes | 11.2 | 14.7 | 15.1 | 18.8 | 18.1 |

| **Stress-strain (ATS)¹** | | | | | |
|---|---|---|---|---|---|
| Tensile strength (MPa) | 22.4 | 22.3 | 22.5 | 22 | 21.6 |
| Elongation at break (%) | 449 | 450 | 466 | 462 | 462 |
| 300% modulus, ring (MPa) | 13.4 | 13.3 | 12.5 | 12.4 | 12.3 |

| **Rebound** | | | | | |
|---|---|---|---|---|---|
| 23°C | 50 | 47 | 50 | 48 | 48 |
| 100°C | 62 | 60 | 63 | 58 | 60 |

| **Hardness (Shore A)** | | | | | |
|---|---|---|---|---|---|
| 23°C | 64 | 67 | 65 | 67 | 68 |
| 100°C | 56 | 58 | 57 | 58 | 59 |

| **Tear strength, N** | | | | | |
|---|---|---|---|---|---|
| 23°C³ | 391 | 344 | 337 | 316 | 248 |
| 95°C³ | 176 | 132 | 137 | 124 | 110 |

| **DIN Abrasion** | | | | | |
|---|---|---|---|---|---|
| 2.5N,cc loss⁴ | 111 | 106 | 102 | 94 | 86 |

From Table 4 it can be seen that a replacement of the natural rubber by 20 phr of the specialized E-SBR(16), namely Evaluation Samples O and Q, and by the combination of the conventional E-SBR(23.5) and cis 1,4-polybutadiene rubber, namely Evaluation Samples P and R, as compared to the natural rubber-rich Control Sample N, resulted in similar rebound and hardness properties, as well as improved (increased) abrasion resistance but demonstrated a somewhat reduced tear strength.

Expanding the replacement of the natural rubber to 40 phr from 20 phr of the E-SBR(16), namely Sample Q, as compared to the natural rubber-rich Control Sample N, resulted in lower tear strength. The rebound property was down slightly, the hardness property was similar. The abrasion resistance was improved (greater) and tear strength was significantly reduced.

Therefore, it is concluded herein that a reasonable partial substitution of natural rubber in a natural rubber-rich rubber composition with the specialized E-SBR(16) can be made for a rubber composition intended for use in a tire tread.

However, it is desired herein to provided additional comparative Evaluation Samples involving substitution of the natural rubber in the natural rubber-rich rubber composition with the E-SBR(16) and combination of a conventional E-SBR(23.5) and cis 1,4-polybutadiene rubber.

### EXAMPLE IV

Further experiments were undertaken to evaluate the feasibility of replacing a portion of natural rubber in a natural rubber-rich rubber composition with the specialized E-SBR(16) and blends of conventional E-SBR(23.5) and cis 1,4-polybutadiene rubber.

Rubber composition Samples S through Y were prepared, with Sample S being a natural rubber-rich rubber composition as a Control Sample. Samples T through Y were Evaluation Samples in which Evaluation Samples T, V and X contained the E-SBR(16) and Evaluation Samples U, W and Y contained the combination of the E-SBR(23.5) and cis 1,4-polybutadiene rubber.

The rubber composition samples were prepared in the manner of Example I.

Table 5 reports various physical properties resulting from variations of the basic formulation (Table 1 of Example I) as reported in the heading of Table 5.

**Table 5**

| | **Control** | | | | | | |
|---|---|---|---|---|---|---|---|
| **Rubber Compound (Cpd) Samples** | **S** | **T** | **U** | **V** | **W** | **X** | **Y** |
| Natural cis 1,4-polyisoprene rubber | 100 | 90 | 90 | 70 | 70 | 50 | 50 |
| Specialized styrene/butadiene rubber, E-SBR(16) | 0 | 10 | 0 | 30 | 0 | 50 | 0 |
| Emulsion styrene/butadiene rubber, E-SBR(23.5) | 0 | 0 | 6 | 0 | 18 | 0 | 30 |
| Cis 1,4-polybutadiene rubber | 0 | 0 | 4 | 0 | 12 | 0 | 20 |

| **Rheometer, 150°C (MDR)¹** | | | | | | | |
|---|---|---|---|---|---|---|---|
| Maximum torque (dNm) | 17.89 | 17.28 | 17.9 | 17.87 | 18.5 | 18.14 | 18.97 |
| Minimum torque (dNm) | 2.95 | 2.81 | 2.98 | 3.15 | 3.13 | 3.26 | 3.06 |
| Delta torque (dNm) | 14.94 | 14.47 | 14.92 | 14.72 | 15.37 | 14.88 | 15.91 |
| T90, minutes | 12 | 14.2 | 13.7 | 19.5 | 18.3 | 24 | 21.8 |

| **Stress-strain (ATS)²** | | | | | | | |
|---|---|---|---|---|---|---|---|
| Tensile strength (MPa) | 23 | 23.3 | 22.7 | 22 | 21.7 | 22.2 | 20.5 |
| Elongation at break (%) | 446 | 457 | 445 | 441 | 437 | 454 | 433 |
| 300% modulus, ring (MPa) | 14.18 | 13.65 | 13.98 | 13.52 | 13.66 | 13.15 | 12.89 |

| **Rebound** | | | | | | | |
|---|---|---|---|---|---|---|---|
| 23°C | 51 | 49 | 49 | 49 | 49 | 48 | 49 |
| 100°C | 64 | 63 | 63 | 61 | 62 | 57 | 60 |

| **Hardness (Shore A)** | | | | | | | |
|---|---|---|---|---|---|---|---|
| 23°C | 65 | 66 | 67 | 68 | 68 | 69 | 68 |
| 100°C | 57 | 58 | 58 | 59 | 60 | 60 | 60 |

| **Tear strength, N** | | | | | | | |
|---|---|---|---|---|---|---|---|
| 23°C³ | 333 | 342 | 340 | 306 | 307 | 287 | 252 |
| 100°C³ | 162 | 159 | 155 | 108 | 119 | 107 | 97 |

| **DIN Abrasion** | | | | | | | |
|---|---|---|---|---|---|---|---|
| 2.5N,cc loss⁴ | 111 | 103 | 107 | 103 | 88 | 93 | 83 |

From Table 5 it can be seen that up to a 30 phr replacement of the natural rubber with the specialized E-SBR(16), or blend of the more conventional E-SBR(23.5) and cis 1,4-polybutadiene rubber, namely Samples T, U, V and W, resulted in rebound, hardness and tear strength properties similar to the control natural rubber based rubber composition (Control Sample S) with improved abrasion resistance.

However at a 50 phr replacement level (Evaluation Samples X and Y), rebound and tear resistance properties are seen to be reduced, although similar hardness and improved abrasion resistance are reported.

Therefore, it is additionally concluded herein that a reasonable partial substitution of natural rubber in a natural rubber-rich rubber composition with the specialized E-SBR(16) can be made for a rubber composition intended for use in a tire tread.

However, it is desired herein further evaluate a simplistic partial substitution of natural rubber in a natural rubber-rich rubber composition with a specialized E-SBR to provide tear resistance and rebound (hysteresis) properties similar to the natural rubber-rich rubber composition.

### EXAMPLE V

Additional experiments were undertaken to evaluate the feasibility of replacing a portion of natural rubber in the natural rubber-rich rubber composition. Blends containing natural rubber and a specialized emulsion polymerization prepared styrene/butadiene rubber having a significantly reduced bound styrene content of 14 percent, referred herein as E-SBR(14) and a significantly increased Mooney(ML1+4), 100°C, viscosity of 80 were evaluated in comparison to a partial substitution with a blend of the conventional E-SBR(23.5) and cis 1,4-polybutadiene rubber.

The basic recipe is illustrated in Table 6.

**Table 6**

| **First Non-Productive Mixing Step** | **Parts** |
|---|---|
| Natural cis 1,4-polyisoprene rubber | variable |
| Specialized emulsion styrene/butadiene elastomer, E-SBR(14)¹⁰ | variable |
| Carbon black, (N220)² | 40 |
| Processing oil³ | variable |
| Microcrystalline wax | 1.5 |
| Fatty acid⁴ | 2 |
| Zinc oxide | 4 |

| **Second Non-Productive Mixing Step (160°C)** | |
|---|---|
| Carbon black² | 13 |
| Antioxidants | 3.5 |

| **Productive Mixing Step** | |
|---|---|
| Sulfur | 1 |
| Accelerator/retarder⁶ | 1.8 |
| Antioxidant | 0.5 |

| | |
|---|---|
| ¹⁰Specialized emulsion polymerization prepared styrene/butadiene elastomer, E-SBR(14) containing a significantly reduced bound styrene of 14 percent, an onset Tg of -65°C (similar to the Tg of the natural rubber), and a significantly increased Mooney (ML1+4), 100°C, viscosity of 80, from The Goodyear Tire & Rubber Company. | |

Rubber composition Samples AA, BB and CC were prepared, with Sample AA being a natural rubber-rich Control Sample. Samples BB and CC were Evaluation Samples

The rubber composition samples were prepared in a manner similar to the process used for Example I.

Table 7 reports various physical properties of resulting from variations of the basic formulation shown in Table 6 as reported in the heading of Table 7.

**Table 7**

| | **Control** | | |
|---|---|---|---|
| **Rubber Compound (Cpd) Samples** | **AA** | **BB** | **CC** |
| Natural cis 1,4-polyisoprene rubber | 100 | 75 | 75 |
| Specialized styrene/butadiene rubber, E-SBR(14) | 0 | 25 | 25 |
| Rubber processing oil | 0 | 0 | 3 |

| **Rheomoter, 150°C (MDR)¹** | | | |
|---|---|---|---|
| Maximum torque (dNm) | 18.92 | 18.69 | 17.04 |
| Minimum torque (dNm) | 3.72 | 4 | 3.89 |
| Delta torque (dNm) | 15.2 | 14.69 | 13.15 |
| T90, minutes | 10.79 | 15.26 | 17.36 |

| **Stress-strain (ATS)²** | | | |
|---|---|---|---|
| Tensile strength (MPa) | 23 | 22.7 | 22.3 |
| Elongation at break (%) | 486 | 507 | 528 |
| 300% modulus, ring (MPa) | 12.49 | 11.26 | 10.17 |

| **Rebound** | | | |
|---|---|---|---|
| 23°C | 41 | 42 | 41 |
| 100°C | 54 | 53 | 53 |

| **Hardness (Shore A)** | | | |
|---|---|---|---|
| 23°C | 70 | 70 | 69 |
| 100°C | 60 | 60 | 58 |

| **Tear strength, N** | | | |
|---|---|---|---|
| 23°C³ | 290 | 315 | 368 |
| 95°C³ | 212 | 188 | 213 |

From Table 7 it can be seen that replacement of 25 phr of the natural rubber in the natural rubber-rich rubber composition with the specialized E-SBR(14) in Samples BB and CC, as compared to Control Sample AA, resulted in rebound, tear resistance and hardness properties similar to the Control Sample AA natural rubber based composition.

Therefore it is concluded herein that the E-SBR(14) can be suitably used to partially replace the natural rubber in the natural rubber-rich rubber composition for a tire tread, particularly a truck tire tread which may be experience heavy loads during operation.

### EXAMPLE VI

Additional experiments were undertaken to evaluate the feasibility of replacing a portion of natural rubber in a natural rubber based composition with the specialized SBR(14) and blends of conventional E-SBR(23.5) and cis 1,4-polybutadiene rubber.

Rubber composition Samples DD through FF were prepared, with Sample DD being a natural rubber-rich rubber composition as a Control Sample. Samples EE and FF were Evaluation Samples.

The rubber composition samples were prepared in the manner of Example V.

Table 8 reports various physical properties of resulting from variations of the basic formulation (Table 6 of Example V) as reported in the heading of Table 8.

**Table 8**

| **Rubber Compound (Cpd) Samples** | **Control** **DD** | **EE** | **FF** |
|---|---|---|---|
| Natural cis 1,4-polyisoprene rubber | 100 | 75 | 75 |
| Specialized styrene/butadiene rubber, E-SBR(14) | 0 | 25 | 0 |
| Emulsion styrene/butadiene rubber, E-SBR(23.5) | 0 | 0 | 15 |
| Cis 1,4-polybutadiene rubber | 0 | 0 | 10 |
| Processing oil | 0 | 3 | 3 |
| **Rheomoter, 150°C (MDR)¹** | | | |
| Maximum torque (dNm) | 18.29 | 16.86 | 17.38 |
| Minimum torque (dNm) | 3.25 | 3.38 | 3.18 |
| Delta torque (dNm) | 15.04 | 13.48 | 14.2 |
| T90, minutes | 11.13 | 16 | 15.25 |
| **Stress-strain (ATS)²** | | | |
| Tensile strength (MPa) | 23.5 | 22.7 | 23.3 |
| Elongation at break (%) | 489 | 528 | 548 |
| 300% modulus, ring (MPa) | 12.19 | 10.11 | 9.66 |
| **Rebound** | | | |
| 23°C | 42 | 40 | 40 |
| 100°C | 56 | 53 | 53 |
| **Hardness (Shore A)** | | | |
| 23°C | 69 | 69 | 68 |
| 100°C | 59 | 58 | 58 |
| **Tear strength, N** | | | |
| 23°C³ | 451 | 592 | 534 |
| 95°C³ | 207 | 184 | 190 |

From Table 8 it can be seen that replacement of 25 phr of the natural rubber with the specialized E-SBR (14), namely Evaluation Sample EE, provided physical properties similar to properties obtained by partial substitution of the natural rubber in the natural rubber-rich rubber composition of Control Sample DD with a blend of conventional E-SBR(23.5) and cis 1,4-polybutadiene rubber, namely Evaluation Sample FF as well as Control Sample DD.

Therefore it is concluded herein that the E-SBR(14) can be suitably used to partially replace the natural rubber in the natural rubber-rich rubber composition for a tire tread, particularly a truck tire tread which may experience heavy loads during operation.

## Claims

1. A tire **characterized by** having a tread of a natural rubber-rich rubber composition comprising, based upon parts by weight per 100 parts by weight rubber (phr):
(A) from 98 to 60 phr of natural cis 1,4-polyisoprene rubber (NR) having a Tg within a range of from -67°C to -62°C, and
(B) from 2 to 40 phr of a specialized emulsion polymerization prepared styrene/butadiene rubber (specialized E-SBR) having a Tg in a range of from -70°C to -60°C selected from:
(1) an E-SBR having a bound styrene content in a range of from 12 to 16 percent combined with a Mooney (ML1+4), 100°C, viscosity in a range of from 60 to 100, or
(2) an E-SBR having a bound styrene content in a range of from 13 to 15 percent combined with a Mooney (ML1+4), 100°C, viscosity in a range of from 70 to 90;
(C) from zero to 20 phr of synthetic cis 1,4-polyisoprene rubber;
(D) from 30 to 120, phr of particulate reinforcing fillers comprising:
(1) from 5 to 120 phr of rubber reinforcing carbon black, and
(2) from zero to 60 phr of precipitated silica or amorphous synthetic silica.

2. The tire of claim 1, wherein said rubber composition contains from 5 to 15 phr of synthetic cis 1,4-polyisoprene rubber.

3. The tire of any of claims 1 or 2, wherein said rubber composition contains from 30 to 120 phr of reinforcing fillers comprising 10 to 70 phr of rubber reinforcing carbon black, and from 5 to 60 phr of precipitated silica.

4. The tire of any of the preceding claims 1 through 3, wherein said precipitated silica is used in conjunction with a silica coupler having a moiety reactive with hydroxyl groups on the precipitated silica and another moiety interactive with the elastomer(s) to create the silica-to-rubber coupling effect.

5. The tire of any of the preceding claims 1 through 4, wherein said precipitated silica is used in conjunction with a silica coupler selected from the group of:
(A) a bis-(3-trialkoxysilylalkyl) polysulfide having an average of from 2 to 4 connecting sulfur atoms in its polysulfidic bridge, or
(B) a combination of a bis-(3-triethoxysilylpropyl) polysulfide having an average of from 2 to 2.6 connecting sulfur atoms in its polysulfidic bridge and a bis-(3-triethoxysilylpropyl) polysulfide having an average of from 3.4 to 4 connecting sulfur atoms in its polysulfidic bridge, wherein said polysulfide having an average of from 2 to 2.6 connecting sulfur atoms in its polysulfidic bridge is blended with said rubber composition in the absence of sulfur and sulfur vulcanization accelerator and wherein said polysulfide having an average of from 3.4 to 4 connecting sulfur atoms in its polysulfidic bridge is thereafter blended with said rubber composition in the presence of sulfur and at least one sulfur vulcanization accelerator, or
(C) an organoalkoxymercaptosilane composition of the general Formula (I) represented as:
(I) (X)ₙ(R⁷O)₃₋ₙ-Si - R₈ -SH
wherein X is a radical selected from chlorine, bromine and from alkyl radicals having from one to 16 carbon atoms; wherein R⁷ is an alkyl radical having from 1 through 18 carbon atoms; wherein R₈ is an alkylene radical having from one to 16 carbon atoms; and n is an average value of from zero through 3, and wherein, in such cases where n is zero or 1, R⁷ may be the same or different for each (R⁷O) moiety in the composition, or
(D) said organoalkoxymercaptosilane of the general Formula (I) in a form of a capped organoalkoxymercaptosilane having its mercapto group be capped with a moiety which uncaps its mercapto group upon heating to an elevated temperature in the presence of an amine.

6. The tire of claim 5, wherein said organoalkoxymercaptosilane comprises triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane or ethoxy dihexadecyloxy mercaptopropylsilane.

7. The tire of claim 5, wherein said capped organoalkoxymercaptosilane is a liquid 3-octanoylthio-1-propyltriethoxysilane.

8. The tire of any of the preceding claims, wherein said silica has been pretreated, prior to addition to said elastomer(s):
(A) with an alkylsilane of the general Formula (II), or
(B) with bis(3-triethoxysilylpropyl) polysulfide having an average of from 2 to 4 connecting sulfur atoms in its polysulfidic bridge, or
(C) with organomercaptosilane of the general Formula (I), or
(D) with a combination of said alkylsilane of the general Formula (I) and bis(3-triethoxysilylpropyl) polysulfide having an average of from 2 to 4 connecting sulfur atoms in its polysulfidic bridge, or
(E) with a combination of alkylsilane of the general Formula (II) and organomercaptosilane of general Formula (I);
wherein said alkylsilane of the general Formula (II) is represented as:
(II) Xₙ - Si -R₆₍₄₋ₙ₎
wherein R₆ is an alkyl radical having from 1 to 18 carbon atoms; n is a value of from 1 through 3; X is a radical selected from chlorine and ethoxy groups.

9. The tire of claim 8, wherein said coupling agent is added directly to the elastomer mixture or is added as a composite of precipitated silica and said coupling agent formed by treating a precipitated silica therewith.

## Patentansprüche

1. Reifen, **gekennzeichnet durch** eine Lauffläche aus einer Naturkautschukreichen Kautschukzusammensetzung, umfassend, bezogen auf Gew.-Teile pro 100 Gew.-Teilen Kautschuk (ThK):
(A) 98 bis 60 ThK cis-1,4-Polyisopren-Naturkautschuk (NR) mit einer Tg im Bereich von -67°C bis -62°C und
(B) 2 bis 40 ThK eines speziellen **durch** Emulsionspolymerisation hergestellten Styrol/Butadien-Kautschuks (spezieller E-SBR) mit einer Tg im Bereich von -70°C bis -60°C ausgewählt aus:
(1) einem E-SBR mit einem Gehalt an gebundenem Styrol im Bereich von 12 bis 16% kombiniert mit einer Mooney (ML 1+4)-Viskosität, 100°C, im Bereich von 60 bis 100; oder
(2) einem E-SBR mit einem Gehalt an gebundenem Styrol im Bereich von 13 bis 15% kombiniert mit einer Mooney (ML 1+4)-Viskosität, 100°C, im Bereich von 70 bis 90;
(C) 0 bis 20 ThK cis-1,4-Polyisopren-Synthesekautschuk;
(D) 30 bis 120 ThK teilchenförmige Verstärkungsfüllstoffe, umfassend:
(1) 5 bis 120 ThK Kautschuk verstärkenden Ruß und
(2) 0 bis 60 ThK Fällungskieselsäure oder amorphe synthetische Kieselsäure.

2. Reifen nach Anspruch 1, wobei die Kautschukzusammensetzung 5 bis 15 ThK cis-1,4-Polyisopren-Synthesekautschuk enthält.

3. Reifen nach irgendeinem der Ansprüche 1 oder 2, wobei die Kautschukzusammensetzung 30 bis 120 ThK Verstärkungsfüllstoffe umfassend 10 bis 70 ThK Kautschuk verstärkenden Ruß und 5 bis 60 ThK Fällungskieselsäure enthält.

4. Reifen nach irgendeinem der vorhergehenden Ansprüche 1 bis 3, wobei die Fällungskieselsäure in Verbindung mit einem Kieselsäure-Haftvermittler mit einer Gruppe, die mit Hydroxylgruppen auf der Fällungskieselsäure reaktiv ist, und einer anderen Gruppe, die mit dem oder den Elastomeren wechselwirkt, verwendet wird, um eine Kieselsäure-Kautschuk-Kopplungswirkung zu erzeugen.

5. Reifen nach irgendeinem der vorhergehenden Ansprüche 1 bis 4, wobei die Fällungskieselsäure in Verbindung mit einem Kieselsäure-Haftvermittler verwendet wird, der aus der folgenden Gruppe ausgewählt ist:
(A) ein Bis(3-trialkoxysilylalkyl)polysulfid mit einem Durchschnitt von 2 bis 4 verbindenden Schwefelatomen in dessen Polysulfidbrücke oder
(B) eine Kombination von einem Bis(3-triethoxysilylpropyl)polysulfid mit einem Durchschnitt von 2 bis 2,6 verbindenden Schwefelatomen in dessen Polysulfidbrücke und einem Bis(3-triethoxysilylpropyl)polysulfid mit einem Durchschnitt von 3,4 bis 4 verbindenden Schwefelatomen in dessen Polysulfidbrücke, wobei das Polysulfid mit einem Durchschnitt von 2 bis 2,6 verbindenden Schwefelatomen in dessen Polysulfidbrücke mit der Kautschukzusammensetzung in Abwesenheit von Schwefel und Schwefelvulkanisationsbeschleuniger vermischt wird und wobei das Polysulfid mit einem Durchschnitt von 3,4 bis 4 verbindenden Schwefelatomen in dessen Polysulfidbrücke danach mit der Kautschukzusammensetzung in Anwesenheit von Schwefel und mindestens einem Schwefelvulkanisationsbeschleuniger vermischt wird, oder
(C) eine Organoalkoxymercaptosilan-Zusammensetzung der allgemeinen Formel (I) dargestellt als:
(I) (X)ₙ(R⁷O)₃₋ₙ - Si - R₈ - SH
worin X ein Rest ausgewählt aus Chlor, Brom und aus Alkylresten mit 1 bis 16 Kohlenstoffatomen ist; worin R⁷ ein Alkylrest mit 1 bis 18 Kohlenstoffatomen ist; worin R₈ ein Alkylenrest mit 1 bis 16 Kohlenstoffatomen ist; und n ein mittlerer Wert von 0 bis 3 ist und worin in solchen Fällen, worin n 0 oder 1 ist, R⁷ gleich oder verschieden sein kann für jede (R⁷O)-Gruppe in der Zusammensetzung, oder
(D) das Organoalkoxymercaptosilan der allgemeinen Formel (I) in Form eines Organoalkoxymercaptosilans mit abgeschlossener Endgruppe, wobei dessen Mercaptogruppe mit einer Gruppe verkappt ist, welche die Mercaptogruppe beim Erwärmen auf eine erhöhte Temperatur in Anwesenheit von einem Amin freimacht.

6. Reifen nach Anspruch 5, wobei das Organoalkoxymercaptosilan Triethoxymercaptopropylsilan, Trimethoxymercaptopropylsilan, Methyldimethoxymercaptopropylsilan, Methyldiethoxymercaptopropylsilan, Dimethylmethoxymercaptopropylsilan, Triethoxymercaptoethylsilan, Tripropoxymercaptopropylsilan, Ethoxydimethoxymercaptopropylsilan, Ethoxydiisopropoxymercaptopropylsilan, Ethoxydidodecyloxymercaptopropylsilan oder Ethoxydihexadecyloxymercaptopropylsilan umfasst.

7. Reifen nach Anspruch 5, wobei das mit einer Endgruppe abgeschlossene Organoalkoxymercaptosilan ein flüssiges 3-Octanoylthio-1-propyltriethoxysilan ist.

8. Reifen nach irgendeinem der vorhergehenden Ansprüche, bei dem die Kieselsäure vor der Zugabe zu dem oder den Elastomeren:
(A) mit einem Alkylsilan der allgemeinen Formel (II) oder
(B) mit Bis(3-triethoxysilylpropyl)polysulfid mit einem Durchschnitt von 2 bis 4 verbindenden Schwefelatomen in dessen Polysulfidbrücke oder
(C) mit Organomercaptosilan der allgemeinen Formel (I) oder
(D) mit einer Kombination von dem Alkylsilan der allgemeinen Formel (I) und Bis(3-triethoxysilylpropyl)polysulfid mit einem Durchschnitt von 2 bis 4 verbindenden Schwefelatomen in dessen Polysulfidbrücke oder
(E) mit einer Kombination von Alkylsilan der allgemeinen Formel (II) und Organomercaptosilan der allgemeinen Formel (I) vorbehandelt worden ist, wobei das Alkylsilan der allgemeinen Formel (II) dargestellt ist als:
(II) Xₙ - Si - R₆₍₄₋ₙ₎
worin R₆ ein Alkylrest mit 1 bis 18 Kohlenstoffatomen ist; n ein Wert von 1 bis 3 ist; X ein Rest ist, der aus Chlor und Ethoxygruppen ausgewählt ist.

9. Reifen nach Anspruch 8, wobei der Haftvermittler direkt zur Elastomermischung hinzugefügt wird oder als Komposit von Fällungskieselsäure und dem Haftvermittler, das durch Behandeln einer Fällungssäure damit gebildet wird, zugegeben wird.

## Revendications

1. Bandage pneumatique **caractérisé par le fait qu'**il possède une bande de roulement d'une composition de caoutchouc riche en caoutchouc naturel comprenant, basées sur des parties en poids par 100 parties en poids de caoutchouc (phr) :
(A) à concurrence de 98 à 60 phr, du caoutchouc naturel de cis 1,4-polyisoprène (NR) possédant une valeur Tg dans la plage de -67 °C à -62 °C, et
(B) à concurrence de 2 à 40 phr, un caoutchouc spécialisé de styrène/butadiène préparé par polymérisation en émulsion (E-SBR spécialisé) possédant une valeur Tg dans la plage de -70 °C à -60 °C, choisi parmi le groupe comprenant :
(1) un E-SBR possédant une teneur en styrène lié dans la plage de 12 à 16 % en combinaison avec une viscosité de Mooney (ML1+4), 100 °C, dans la plage de 60 à 100 ; ou
(2) un E-SBR possédant une teneur en styrène lié dans la plage de 13 à 15 % en combinaison avec une viscosité de Mooney (ML1+4), 100 °C, dans la plage de 70 à 90 ; ou
(C) à concurrence de zéro à 20 phr, du caoutchouc synthétique de cis 1,4-polyisoprène ;
(D) à concurrence de 30 à 120 phr d'une matière de charge de renforcement particulaire comprenant :
(1) à concurrence de 5 à 120 phr, du noir de carbone pour le renforcement du caoutchouc ;
(2) à concurrence de zéro à 60 phr de la silice précipitée ou de la silice synthétique amorphe.

2. Bandage pneumatique selon la revendication 1, dans lequel ladite composition de caoutchouc contient du caoutchouc synthétique de cis 1,4-polyisoprène à concurrence de 5 à 15 phr.

3. Bandage pneumatique selon l'une quelconque des revendications 1 ou 2, dans lequel ladite composition de caoutchouc contient des matières de charge de renforcement à concurrence de 30 à 120 phr, comprenant du noir de carbone pour le renforcement de caoutchouc à concurrence de 10 à 70 phr et de la silice précipitée à concurrence de 5 à 60 phr.

4. Bandage pneumatique selon l'une quelconque des revendications 1 à 3, dans lequel ladite silice précipitée est utilisée conjointement avec un coupleur pour la silice possédant une fraction apte à réagir avec des groupes hydroxyle sur la silice précipitée et une autre fraction entrant en interaction avec l'élastomère/les élastomères pour créer un effet de couplage silice-caoutchouc.

5. Bandage pneumatique selon l'une quelconque des revendications 1 à 4, dans lequel ladite silice précipitée est utilisée conjointement avec un coupleur pour la silice choisi parmi le groupe comprenant :
(A) un bis-(3-trialcoxysilylalkyl) polysulfure possédant en moyenne de 2 à 4 atomes de soufre de liaison dans son pont polysulfure ; ou
(B) une combinaison d'un bis-(3-triéthoxysilylpropyl) polysulfure possédant en moyenne de 2 à 2,6 atomes de soufre de liaison dans son pont polysulfure et un bis-(3-triéthoxysilylpropyl) polysulfure possédant en moyenne de 3,4 à 4 atomes de soufre de liaison dans son pont polysulfure, ledit polysulfure possédant en moyenne de 2 à 2,6 atomes de soufre de liaison dans son pont polysulfure étant mélangés avec ladite composition de caoutchouc en l'absence de soufre et d'un accélérateur de vulcanisation au soufre et ledit polysulfure possédant en moyenne de 3,4 à 4 atomes de soufre de liaison dans son pont polysulfure étant mélangés par la suite avec ladite composition de caoutchouc en présence de soufre et d'au moins un accélérateur de la vulcanisation au soufre ; ou
(C) une composition à base d'organoalcoxymercaptosilane répondant à la formule générale (I) :
(I) (X)ₙ(R⁷O)₃₋ₙ - Si - R₈ - SH
dans laquelle X représente un radical choisi parmi un radical de chlore, un radical de brome et parmi des radicaux alkyle contenant de 1 à 16 atomes de carbone ;
dans laquelle R⁷ représente un radical alkyle contenant de 1 à 18 atomes de carbone ; dans laquelle R₈ représente un radical alkylène contenant de 1 à 16 atomes de carbone ; et n représente une valeur moyenne de zéro à 3, et dans laquelle, lorsque n est égal à zéro ou 1, R⁷ peut être identique ou différent pour chaque fraction (R⁷O) dans la composition ; ou
(D) ledit organoalcoxymercaptosilane répondant à la formule générale (I) sous la forme d'un organoalcoxymercaptosilane bloqué dont le groupe mercapto est bloqué avec une fraction qui débloque son groupe mercapto lors d'un chauffage à une température élevée en présence d'une amine.

6. Bandage pneumatique selon la revendication 5, dans lequelle ledit organoalcoxymercaptosilane comprend le triéthoxy mercaptopropyl silane, le triméthoxy mercaptopropyl silane, le méthyl diméthoxy mercaptopropyl silane, le méthyl diéthoxy mercaptopropyl silane, le diméthyl méthoxy mercaptopropyl silane, le triéthoxy mercaptoéthyl silane, le tripropoxy mercaptopropyl silane, le diméthyl méthoxy mercaptopropyl silane, le triéthoxy mercaptoéthyl silane, le tripropoxy mercaptopropyl silane, l'éthoxy diméthoxy mercaptopropyl silane, l'éthoxy diisopropoxy mercaptopropyl silane, l'éthoxy didodécyloxy mercaptopropyl silane ou l'éthoxy dihexadécyloxy mercaptopropyl silane.

7. Bandage pneumatique selon la revendication 5, dans lequelle ledit organoalcoxymercaptosilane bloqué est un 3-octanoylthio-1-propyltriéthoxysilane.

8. Bandage pneumatique selon l'une quelconque des revendications précédentes, dans lequel ladite silice a été prétraitée avant son addition audit/auxdits élastomère(s) :
(A) avec un alkylsilane répondant à la formule générale (II) ; ou
(B) avec un bis-(3-triéthoxysilylpropyl) polysulfure possédant en moyenne de 2 à 4 atomes de soufre de liaison dans son pont polysulfure ;
(C) avec un organomercaptosilane répondant à la formule générale (I) ; ou
(D) avec une combinaison dudit alkylsilane répondant à la formule générale (I) et un bis-(3-triéthoxysilylpropyl) polysulfure possédant en moyenne de 2 à 4 atomes de soufre de liaison dans son pont polysulfure ; ou
(E) avec une combinaison d'un alkylsilane répondant à la formule générale (II) et d'un organomercaptosilane répondant à la formule générale (I) ;
ledit alkylsilane répondant à la formule générale (II) étant représenté par la formule :
(II) Xₙ - Si - R₆₍₄₋ₙ₎
dans laquelle R₆ représente un radical alkyle contenant de 1 à 18 atomes de carbone ; n représente une valeur de 1 à 3 ; X représente un radical choisi parmi un atome de chlore et un groupe éthoxy.

9. Bandage pneumatique selon la revendication 8, dans lequel ledit agent de couplage est ajouté directement au mélange élastomère ou bien est ajouté sous la forme d'un composite d'une silice précipitée et dudit agent de couplage, obtenu par traitement d'une silice précipitée avec ce dernier.
